# EUROPEAN PATENT APPLICATION

(11) **EP 3 961 007 A1**
(43) Date of publication of application: **02.03.2022**
(21) Application number: 20193880.0
(22) Date of filing: 01.09.2020
(51) Int. Cl.: F02B 19/16, F02B 19/10, F02M 29/04, F02M 69/04, F02M 31/135, F02M 31/18

(54) **INDIRECT-TYPE INJECTION COMBUSTION ENGINE**

(71) Applicant: TOYOTA JIDOSHA KABUSHIKI KAISHA, TOYOTA-SHI, AICHI-KEN 471-8571 (JP)
(72) Inventor: SHAHANGIAN, Navid, 1140 BRUSSELS (BE)
(74) Representative: Cabinet Beau de Loménie

(57) **Abstract**

The disclosure relates to an indirect-type injection combustion engine (1).

This engine comprises a prechamber (11) in fluid communication with a cylinder (3) of the combustion engine; an injector nozzle (15) having an axis, and being affixed in the prechamber (11), and a porous medium (20) configured to disperse fuel injected by the injector nozzle in the prechamber via a plurality of pores in the porous medium.

In addition, in at least a plane (P) perpendicular to the axis (X) of the injector nozzle (15) and passing through the injector nozzle, a cross-section (20C) of the porous medium forms a continuous ring enclosing a section of the injector nozzle (15) on all sides, and at least 50% of a cross-section of an outer surface (20D) of the porous medium (20) is spaced from a cross-section of an inner wall (11A) of the prechamber.

## Description

### FIELD OF THE DISCLOSURE

The disclosure concerns an indirect injection-type internal combustion engine having a specific prechamber design, for improving cold start performance as well as lower exhaust emissions.

### BACKGROUND OF THE DISCLOSURE

As known per se, in an indirect injection diesel engine, air is forced at high velocity through an injection duct from the main combustion chamber into the prechamber. In the prechamber, the injected fuel interacts with the strongly turbulent air flow injected in the prechamber, thus achieving rapid air-fuel mixing. As a limited amount of air is injected in the prechamber, the air-fuel ratio in the prechamber is relatively rich. With the high temperature and pressure reached towards the end of compression stroke, combustion initiates in the prechamber. With the combustion, the pressure rises; the unburned or partially burned gases along with the remainder of fuel in liquid phase are blown into the main chamber where they are mixed with intake air and complete their combustion.

A 'porous media assisted' prechamber or pre-combustion chamber for a compression ignition indirect injection-type internal combustion engine is known from document AU2012100215.

Document AU 2012100215 proposes an improvement to a preceding concept disclosed by document DE 19813891, which proposes to include a porous medium in a prechamber of a diesel engine. The resulting engine uses one or more porous plates disposed in the prechamber and heated by one or more glow plugs. These porous plates are arranged in the path of the fuel spray downstream from the point of injection; the injected fuel spray has therefore to pass through the porous plates before leaving the porous plates and starting to burn.

In such an engine, the strong interaction of the spray flow with the porous structure is utilized to create a finely atomized spray flow across the impingement direction and to mix quickly the fuel with air in the pre-combustion chamber. This uniform charge can be then ignited by compression near the end of compression stroke.

The porous medium plates, positioned in the prechamber in the path of the fuel spray downstream from the point of injection facilitate homogenous combustion of the air-fuel mixture, which lowers the level of particulate exhaust emissions. In addition, due to heat accumulation in the solid phase of the porous structure during combustion, the NOx formation at high-temperatures in the engine is also reduced.

However, a number of problems still need to be addressed related to the construction and operation of such conventional prechamber diesel engines: 1) burning of a heterogeneous rich fuel mixture creates higher than average levels of particulates matter in the prechamber, which can consequently increase the level of engine smoke emissions 2) the high compression ratio in the engine increases the formation of various NOx compounds due to higher temperature of combustion 3) expensive catalytic cleansing of the combustion gases is necessary for cleansing the exhaust gases, which consequently increases the total cost of the engine.

### SUMMARY OF THE DISCLOSURE

A main purpose of the present disclosure is therefore to overcome at least partially the above-mentioned drawbacks of such engine. Additionally, the present disclosure has been further conceived to avoid:
a) inadequate evaporation of liquid fuel droplets and accumulation of fuel inside the porous media volume especially at cold start condition
b) wetting of the prechamber surface and nozzle tip by rebounded spray from the surface of the porous medium
c) breakage or cracking of the porous structure by thermal shocks by repeated heating and cooling during engine cycle as well as high rate of pressure rise in the prechamber during each combustion event
d) blockage of the pores of the porous medium member by products of combustion such as soot particles due to inadequate flushing.

To meet the above-mentioned purposes, an indirect-type injection combustion engine having a distinctive design is proposed. In the prechamber of the engine according to the present disclosure, a porous medium is provided in a specific fashion to address the issues of a conventional prechamber diesel engines explained above.

The indirect-type injection combustion engine comprises a prechamber in fluid communication with a cylinder of the combustion engine; an injector nozzle having an axis, and being affixed in the prechamber, and a porous medium configured to disperse fuel injected by the injector nozzle in the prechamber via a plurality of pores in the porous medium, wherein, in at least a plane perpendicular to the axis of the nozzle and passing through the injector nozzle, a cross-section of the porous medium forms a continuous ring enclosing the section of the injector nozzle on all sides (on 360°); and at least 50%, preferably more than 80%, and even more preferably 100% of a cross-section of an outer surface of the porous medium is spaced from a cross-section of an inner wall of the prechamber (The foregoing percentages are expressed as angular percentages of the total angle of 360°).

In addition, a radial ejection axial range can be defined on the axis of the injector nozzle. This radial ejection range represents an axial range of locations, along the axis of the injector nozzle, at which the fuel can be ejected substantially radially through the porous medium. In this purpose, in each plane perpendicular to the axis of the nozzle and located in said radial ejection axial range, a cross-section of the porous medium forms a continuous ring enclosing the section of the injector nozzle on all sides; and at least 50%, preferably more than 80%, and even more preferably 100% of a cross-section of an outer surface of the porous medium is spaced from a cross-section of an inner wall of the prechamber.

Preferably, the radial ejection axial range includes an axial range of an injection part of the injector nozzle; this injection part is the part of the injection nozzle which has injection holes.

Preferably, the radial ejection axial range extends over at least two times said axial range of the injection part of the injector nozzle.

Since the porous medium surrounds the injector nozzle at least in said plane perpendicular to the axis of the injector nozzle, and since at least in this plane, an outer surface of the porous medium is spaced (at least partly) from an inner wall of the prechamber, at least in said plane, fuel can be ejected radially through the porous medium in the space between the peripheral surface of the porous medium and the inner wall of the prechamber. Therefore, at least in said plane, the injected fuel can be mixed efficiently with the gases present in the prechamber.

The porous medium, in addition to presenting a surface area, has an observable thickness, for example greater than 2 mm, and more specifically, between 5 and 10mm.

According to various embodiments of the present disclosure, the combustion engine may comprise part or all of the following features (as long as they are technically compatible):
the injector nozzle comprises a plurality of injection holes, and a majority or preferably all of these injection holes are located axially in register with a first half of the sleeve portion positioned axially between the cylinder and the other half of the injector nozzle;
the porous medium is formed integrally;
an electric heater is arranged at least partly in a wall of the porous medium; the porous medium is fastened on the injector nozzle or on an injector nozzle holder;
the porous medium is formed of a reticulated porous ceramic material, preferably having pore density of 10 to 20 ppi (numbers of pores per inch); and the porous medium contains Silicon carbide and/or Zirconium oxide.

Since there is a probability of inadequate fuel evaporation during the cold start operation of the engine due to low temperature of the porous media and prechamber body, according to the current disclosure, in some embodiments the porous medium is heated electrically. The heater will increase the temperature of the porous medium before the start of injection process, a temperature which is proper for evaporation of the fuel at cold start condition. Therefore the fuel entering the cylinder is already in vapor or partially vapor state using a heated porous medium at cold start condition.

Preferably, the porous medium has a porosity of 80% or more. The term porosity defines the percentage of void space in the porous medium.

In the engine according to the present disclosure, a cyclic flushing can be made in the prechamber to eliminate possible fuel remains or combustion products from the porous medium, using the strong airflow within the prechamber.

This flushing of the porous medium is important since clogging the pores of the porous medium can lead to several problems, such as incomplete combustion and high level of soot emissions, in particular at high temperatures. In the above-proposed engine, a large part of the volume of the prechamber can be used for the flushing of the porous medium. Advantageously, since the porous medium positioned around the injector nozzle, it does not restrict the swirling motion of the airflow around the porous medium within the prechamber.

For instance, when the porous medium is placed at a central position in the prechamber, the gases can flow all around the porous medium in the prechamber, which enhances the homogeneity of fuel air mixture and advantageously avoids or reduces the formation of fuel rich areas in the prechamber.

In some embodiments, the porous medium comprises a sleeve portion arranged coaxially with an axis of the injector nozzle. In this case, advantageously the cylindrical shape of the medium in the current disclosure provides more homogenous distribution of the fuel spray flow in the prechamber.

In some embodiments, the engine may be configured so that at least 50%, and preferably more than 80% of an outer surface of the porous medium is directly exposed to air entering the prechamber from the main combustion chamber arranged in the cylinder. An 'outer' surface of the porous medium is here any surface of the porous medium for which at least a part of the porous medium is situated between the surface and the injection nozzle.

In these embodiments, since a large part of the outer surface of the sleeve portion is directly exposed to air entering the prechamber (which means that air can reach the outer surface of the sleeve portion without flowing through any barrier, such as the porous medium itself), the elimination of the fuel remains or combustion products from the porous medium can be carried out quite efficiently.

In the engine according to the present disclosure, the injector nozzle is surrounded by the porous medium. Consequently, during operation of the engine, the fuel spray cannot impinge directly on the walls of the prechamber. Therefore, the shape of the prechamber and of the porous medium in the proposed engine reduces the risk of wetting the inner surface of the prechamber.

As mentioned above, ceramics such as Silicon carbide (SiC) and Zirconium oxide (ZrO2) are suggested for the porous medium. Indeed, such material exhibit a high resistance to cracking due to thermal shock. In addition, the high thermal capacity of SiC porous ceramics can be efficiently used to lower the temperature of the combustion process. Since the heat capacity of the porous member is several orders of magnitudes higher than the heat capacity of the combustion-gas trapped in the prechamber volume, controlling the combustion temperature over a wide range of mixture compositions (corresponding to a broad range of air-fuel ratios) and engine operational conditions is made possible.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Figure 1 shows a cross-sectional side view of an internal combustion engine (a diesel engine) according a first embodiment of the present disclosure.
Figure 2 shows in more details a part of Figure 1;
Figure 3 shows in perspective a part of an injector and of a porous medium of the engine of Figure 1, in exploded view.
Figure 4 shows in perspective a simplified view of a porous medium of an engine according a second embodiment of the present disclosure.
Figure 5 shows a configuration of the engine of Fig.1 in which, in a plane perpendicular to an axis of the injector nozzle, a cross-section of the porous medium surrounds the injector nozzle, and a cross-section of an outer surface of the porous medium is spaced from a cross-section of an inner wall of the prechamber.
Figure 6 shows a cross-sectional partial side view of an internal combustion engine (a gasoline engine) according a third embodiment of the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

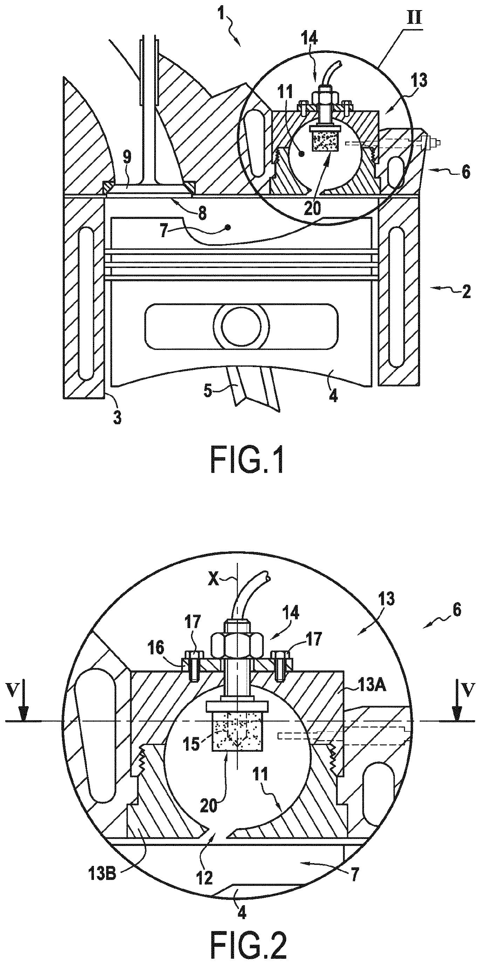

Figures 1 and 2 show at different scales a same cross section of one cylinder of an exemplary indirect-type injection internal combustion engine 1 according to a first embodiment of the present disclosure. One of skill understands that while a single cylinder is shown and discussed for purposes of explanation, the internal combustion engine may comprise as many cylinders as desired, each having a similar configuration to that described herein.

Combustion engine 1 includes a cylinder block 2 with at least one cylinder 3. A piston 4 mounted in cylinder 3 is connected to a connecting rod 5.

In this embodiment, the combustion engine 1 is a diesel engine, for instance a diesel engine for vehicle. The present disclosure is not limited to diesel engines, and can be implemented on a variety of engines, for instance gasoline engines (this will be illustrated below by a third embodiment).

A cylinder head 6 closes the cylinders of cylinder block 2. In particular, a main combustion chamber 7 is formed in cylinder 3 between piston 4 and cylinder head 6.

Combustion engine 1 further includes an intake port 8 to inject air into cylinder 3. An air injection valve 9 is provided at intake port 8 to control air injection therethrough.

Combustion engine 1 also includes an injection port 10. Since engine 1 is an indirect-type injection internal combustion engine, the injection port is not located in a wall of the main combustion chamber 7, but in a prechamber 11.

Engine 1 further includes a non-shown exhaust port, arranged on the cylinder head 6, through which combustion gases exit cylinder 3.

Prechamber 11 is a chamber of smaller size than main combustion chamber 7, which is in fluid communication with main combustion chamber 7. In the present embodiment, prechamber 11 is in fluid communication with main combustion chamber 7 via an injection duct 12.

Prechamber 11 is arranged in an injection body 13 (comprising an upper part 13A and a lower part 13B) which forms part of cylinder head 6. Prechamber 11 may have any suitable shape and size, depending on a design of the engine.

Engine 1 further includes at least one controlled (e.g., electronically via an ECU) fuel injector 14, to inject fuel in prechamber 11.

Fuel injector 14 comprises an injector nozzle 15, having an axis X, and through which fuel is injected in prechamber 11. Fuel injector 14 is affixed to injection body 13 (e.g., via a positioning plate 16 and screws 17), whereby the injector nozzle 15 is affixed in prechamber 11.

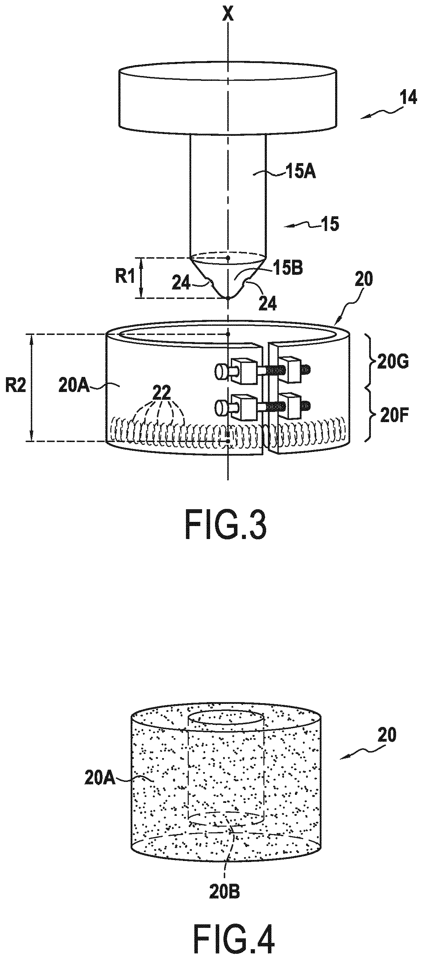

The injector nozzle 15 comprises a cylindrical part 15A, with a conical end part 15B at its lower end (Fig.3).

Injection holes 24 are formed on the conical end part 15B which therefore constitutes the injection part of the injector nozzle 15. Consequently in the present embodiment, all the injection holes 24 are located axially in register with a first half 20F of the sleeve portion 20A. This first half 20F of the sleeve portion 20A (represented on Fig.3 as the lower half) is positioned axially (with respect to axis X) between the cylinder 3 and the other half 20G (the 'other half' being represented on the upper side, on Fig.3) of the injector nozzle 15.

Fuel injector 14 is configured to inject fuel into the cylinder 3 formed in cylinder block 2 in which piston 4 reciprocates such that the air/fuel mixture may be subsequently ignited (via a spark or due to compression) within the cylinder. General operation of a combustion engine is well understood by one of skill in the art and will not be discussed in detail herein.

Engine 1 further includes a porous medium 20.

In order to allow the porous medium 20 to disperse the fuel efficiently in prechamber 11, and to reduce the risk for the porous medium 20 of being clogged, the porous medium 20 is spaced (that is, placed at a certain distance) from an inner wall 11A of the prechamber 11. Therefore, the fuel can be projected not only below the nozzle 15, but also radially outside the porous medium, to mix with the gases present in the prechamber.

This being said, in accordance with the present disclosure, it is not necessary for the porous medium 2 to be spaced at all points from the inner wall 11A of the prechamber 11.

It can be enough to have in at least a plane P perpendicular to the axis X of the injector nozzle, the following configuration.

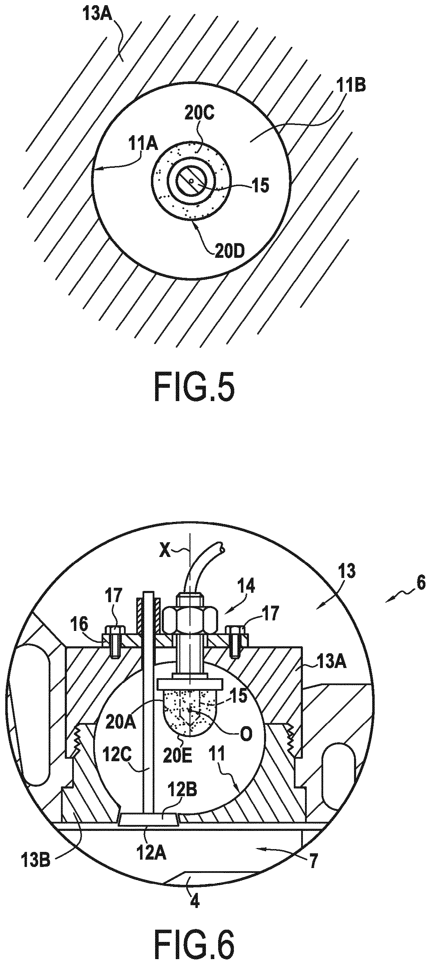

This configuration, illustrated by Fig.5, defines the arrangement of the porous medium 20 relative to the injector nozzle 15 and to an inner surface 11A of the prechamber 11 in a cross-section in the plane P.

In such a plane P, porous medium 20 surrounds injector nozzle 15, which means that a cross-section 20C of the porous medium 20 forms a continuous ring enclosing the section of the nozzle on all sides (on 360°). In addition, in this plane, at least 50% of the cross-section of the outer surface 20D of the porous medium 20 in plane P is spaced from the cross-section of the inner wall 11A of the prechamber. (Actually, in the embodiment of Fig.5 the whole cross-section of the outer surface 20D is spaced from the cross-section of the inner wall 11A.)

Consequently, at least in this plane, the porous medium 20 can efficiently disperse the fuel injected by the injector nozzle 15 in the space 11B arranged in prechamber 11 between the outer surface 20D of the porous medium and the inner surface 11A.

The configuration described above is preferably adopted over a range R2 of locations (that is, a range of locations for plane P) on the axis X of the injector nozzle 15. This range R2 preferably includes the axial range R1 of the injection part (injection part 15B) of the injector nozzle. Most preferably, as in the present embodiment, range R2 extends over two times the axial range R1 of the injection part (15B).

Besides, range R2 may extend over part of the whole axial range of the porous medium 20, or over the whole axial range of the porous medium.

Injector nozzle 15 is formed with a plurality of injection holes 24 through which fuel is ejected when the engine is operated. In the present embodiment, the porous medium 20 surrounds said plurality of injection holes.

Porous medium 20 can have different shapes.

The porous medium can for instance (as in the present embodiment) be shaped as a hollow cylinder (closed or not), arranged coaxially with the injector nozzle.

In other embodiments, the porous medium can comprise a portion of hemispherical shape, centered on a point of the axis X of the injector nozzle.

The distance between the nozzle and the porous medium is typically in the range 5 to 10 mm.

Referring in detail to Figs.2-4, fuel injector 14 has an elongated shape arranged along its axis X which, in this embodiment, is vertical. Injector nozzle 15 is shaped as a hollow pin, which forms a lower end of fuel injector 14.

As mentioned before, the porous medium 20 comprises a hollow cylindrical sleeve 20A.

In the first embodiment (Fig.3), the porous medium 20 only comprises the hollow cylindrical sleeve 20A, which is open-ended. In the second embodiment (Fig.4), the porous medium 20 the hollow cylindrical sleeve 20A is closed at its lower end by a flat bottom 20B.

As shown in Fig.2, the porous medium 20 is configured so that the inner surface of the porous medium 20 be at a distance of the injector nozzle 15. This distance is chosen so as to have the best fuel dispersion in the volume inside the porous medium and to reduce fuel reflection from the medium surface.

In this embodiment, the porous medium is fastened on the fuel injector 14. It could also be fastened on a fuel injector holder, or on the injection body itself.

An electric heater 21 is incorporated inside the porous medium 20, as shown on Fig 3. More specifically, electric heater 21 is arranged at least partly in a wall of the porous medium. As an alternative, a glow plug can also be used to heat the fuel injected in the prechamber at cold start.

Electric heater 21 is used to increase the temperature of the porous medium before the start of injection process, to a temperature which is required for evaporation of the fuel at cold start condition. The advantage of using such an electrical heater compared to a glow plug is that it permits homogenous heating of the medium.

Indeed, electric heater 21 comprises a plurality of heating elements 22 (resistors) distributed along the periphery of the porous medium 20. These heating elements enhance the evaporation of the fuel spray passing through porous medium 20.

When the engine is operated, the partly evaporated fuel spray mixes with intake air which flows within prechamber 11. A homogenous combustible mixture is thus formed, which then flows into main combustion chamber 7 through injection duct 12. The fuel-rich core of the spray, is mainly in gaseous phase, when it is dispersed out of porous medium 20. This will significantly reduce the chance of having a wet film of fuel being formed on the inner wall of the injection body 13, especially at cold start.

After the fuel-air mixture is formed in prechamber 11, it is ignited due to compression near the end of compression stroke. A pressure rise ensues, whereby the fuel-air mixture, unburned or partially burned, along with additional fuel injected, is injected into the main combustion chamber 7 where the combustion process is completed.

For heating of the porous medium 20, electric heater 21 can be used. The heating of the porous medium is switched off as soon as the engine is sufficiently warmed-up. The (non-shown) battery of the vehicle, with a voltage of 12V, 48V or even 300V, can be used to feed the electric heater and provide electric current to the heating elements 22.

According to the present disclosure, porous medium 20 is formed integrally. However, it can also be formed of two or more parts.

To have a better cleaning of the porous medium from the possible accumulated droplets, the outer surface 20D of porous medium 20 is exposed as much as possible to the intake air, in prechamber 11. This reduces the risk of clogging of the porous medium by particulate matters coming from burned gases, and further facilitates the mixing between the injected fuel and the gases present in the prechamber. In this purpose, at least 50%, and preferably more than 80% of the outer surface of the porous medium (in this case, of sleeve 20A) is spaced from the inner wall 11A of prechamber 11 and is therefore exposed to intake air flowing in prechamber 11.

A third embodiment of the present disclosure is shown on Fig.6, which represents a partial cross-section of a gasoline engine 1.

Unless specified otherwise, the components of gasoline engine 1 are essentially identical or similar to the corresponding components of diesel engine 1 of Fig.1. For this reason, the components having the same structure or function in the two engines bear the same reference signs, and their description is not repeated.

In the gasoline engine 1, as in the diesel engine of Fig.1, a prechamber (prechamber 11) is used to prepare a premixed mixture of fuel and air during intake process, by carrying out an early injection of fuel in the prechamber. Consequently, the same chamber as prechamber 11 of Fig.1 can be used for this pre-mixing step. However in the case of a gasoline engine, the prechamber 11 should be disconnected from the main combustion chamber 7 during the combustion process. In this purpose, gasoline engine further comprises a fuel injection valve 12A.

The fuel injection valve 12A comprises a disc-shaped head 12B, driven by a drive rod 12C.

In the diesel engine 1 of Fig.1, the axis X of the injector nozzle passes substantially at the center of the prechamber 11.

By contrast, in the gasoline engine 1, the injector 14 is slightly shifted away from the center of prechamber 11. This makes it possible for the driving rod 12C to extend through prechamber 11 while remaining at a distance from the injector 14.

In addition, in this embodiment, the porous medium 20 comprises an (optional) upper part formed as a hollow cylindrical sleeve 20A, and a lower part 20E of hemispherical shape, centered on a point O of the axis X of the injector nozzle 15.

Moreover, in the gasoline engine 1, no glow-plug is provided to provide heat in prechamber 11, but a spark plug is provided to ignite the air/fuel mixture in the main chamber.

In operation, the following steps are carried out cyclically in the gasoline engine 1:
a) injection of a fuel spray within the prechamber 11 during the intake stroke, when the fuel injection valve 12A is open;
b) closing of the prechamber using the fuel injection valve 12A, during the compression stroke;
c) combustion, initiated by a spark plug in the main combustion chamber 7, during the combustion stroke;
d) exhaust; the fuel injection valve 12A remains closed (there are no exhaust gases or particles in prechamber 11); and
e) during the intake process, the air injection valve 9 and the fuel injection valve 12A open, letting injection take place at an early stage of the engine cycle.

## Claims

1. An indirect-type injection combustion engine (1), comprising:
a prechamber (11) in fluid communication with a cylinder (3) of the combustion engine;
an injector nozzle (15) having an axis, and being affixed in the prechamber (11), and
a porous medium (20) configured to disperse fuel injected by the injector nozzle in the prechamber via a plurality of pores of the porous medium, wherein
in at least a plane (P) perpendicular to the axis (X) of the injector nozzle (15) and passing through the injector nozzle:
a cross-section (20C) of the porous medium forms a continuous ring enclosing a section of the injector nozzle (15) on all sides, and
at least 50%, and preferably more than 80% of a cross-section of an outer surface (20D) of the porous medium is spaced from a cross-section of an inner wall (11A) of the prechamber.

2. The combustion engine according to claim 1, wherein the porous medium (20) comprises a sleeve portion (20A) arranged coaxially with an axis (X) of the injector nozzle (15).

3. The combustion engine according to claim 2, wherein the injector nozzle (15) comprises a plurality of injection holes (24), located axially in register with a first half (20F) of the sleeve portion (20A) positioned axially between the cylinder (3) and an other half (20G) of the injector nozzle.

4. The combustion engine according to any one of claims 1 to 3, wherein the porous medium (20) is formed integrally.

5. The combustion engine according to any one of claims 1 to 4, wherein an electric heater (21) is arranged at least partly in a wall of the porous medium.

6. The combustion engine according to any one of claims 1 to 5, wherein the porous medium (20) is fastened on the injector nozzle or on an injector nozzle holder.

7. The combustion engine according to any one of claims 1 to 6, wherein the porous medium (20) is formed of a reticulated porous ceramic material, preferably having pore density of 10 to 20 ppi.

8. The combustion engine according to any one of claims 1 to 7, wherein the porous medium (20) contains Silicon carbide and/or Zirconium oxide.

9. The combustion engine according to any one of claims 1 to 8, wherein the porous medium (20) has a porosity of 80% or more.

10. The combustion engine according to any one of claims 1 to 9, wherein the engine is configured so that at least 50%, and preferably more than 80% of an outer surface (20D) of the porous medium (20) is directly exposed to air entering the prechamber from a main combustion chamber (7) arranged in the cylinder (3).

11. The combustion engine according to any one of claims 1 to 10, wherein the porous medium (20) comprises a portion (20E) of hemispherical shape, centered on a point (O) of an axis (X) of the injector nozzle (15).

12. The combustion engine according to any one of claims 1 to 11, wherein,
a radial ejection axial range (R2) being defined on the axis (X) of the injector nozzle (15),
the radial ejection axial range (R2) including an axial range (R1) of an injection part (15B) of the injector nozzle which has injection holes (24),
in each plane (P) perpendicular to the axis of the nozzle and located in said radial ejection axial range (R2):
a cross-section of the porous medium forms a continuous ring enclosing the section of the nozzle on all sides, and
at least 50%, and preferably more than 80% of a cross-section of an outer surface (20D) of the porous medium is spaced from a cross-section of an inner wall (11A) of the prechamber.

13. The combustion engine according to any one of claims 1 to 12, wherein at least 50%, and preferably more than 80% of an outer surface (20D) of the porous medium is spaced from an inner wall (11A) of the prechamber.
